Europäisches Patentamt

European Patent Office

Office européen des brevets

(11) Veröffentlichungsnummer: **0 336 253**
**A1**

## (12) EUROPÄISCHE PATENTANMELDUNG

(21) Anmeldenummer: 89105384.5

(22) Anmeldetag: 25.03.89

(51) Int. Cl.⁴: **B28D 1/08 , B27B 33/14**

(30) Priorität: 02.04.88 DE 3811265

(43) Veröffentlichungstag der Anmeldung:
**11.10.89 Patentblatt 89/41**

(84) Benannte Vertragsstaaten:
**AT BE CH DE FR GB IT LI LU NL SE**

(71) Anmelder: **MVZ MASCHINENBAU UND VERZAHNUNGSTECHNIK, JOHANNES FALKENSTEIN**
**Zeppelinstrasse 16**
**D-7953 Bad Schussenried(DE)**

(72) Erfinder: **Falkenstein, Johannes**
**Zeppelinstrasse 16**
**D-7953 Bad Schussenried(DE)**

(74) Vertreter: **Patentanwälte Dipl.-Ing. E. Eisele**
**Dr.-Ing. H. Otten**
**Seestrasse 42**
**D-7980 Ravensburg(DE)**

(54) **Sägewerkzeug mit angepasster Sägemaschine.**

(57) Es wird ein Sägewerkzeug vorgeschlagen, welches aus einem Seil 2 mit darauf angeordneten Schneid- bzw. Schleifelementen 3 besteht. Um dem Sägeseil eine optimale Führung in einer Bandsäge, Kettensäge oder Gattersäge zu verleihen, sind Führungselemente 16 oder Führungsflächen 28 vorgesehen, die in entsprechend angepaßte Nuten oder Führungsbahnen 18, 18′ in der Sägemaschine 19 verlaufen.

Fig 1

EP 0 336 253 A1

## Sägewerkzeug mit angepaßter Sägemaschine

Die Erfindung betrifft ein Sägewerkzeug nach dem Oberbegriff des Anspruchs 1.

Zur Bearbeitung von gesteinsartigen Materialien, wie Grabsteine, Marmorplatten o. dgl., mit Bandsägemaschinen sind endlose diamantbeschichtete Sägeseile bekanntgeworden. Um Innenkonturen bearbeiten zu können, führt man das geöffnete Seil durch ein Loch und verschließt dieses mittels eines Verschlusses.

Sägewerkzeuge mit einem Drahtseil als Kern haben den Vorteil, daß sie in ihrem Durchmesser sehr klein gehalten werden können und damit zur Bearbeitung feinster Konturen geeignet sind. Um eine gewisse Flexibilität zu behalten, darf das Seil nicht durchgehend mit einer zum Beispiel galvanisch aufgebrachten Diamantbeschichtung versehen sein, da dieses bei einer Umlenkung an einer Bandsägemaschine, d. h. einer stetigen Beanspruchung auf Biegung, zerstört werden würde. Deshalb weisen derartige Sägeseile eine in Abständen angeordnete Diamantbeschichtung auf, die im allgemeinen durch auf das Seil aufgeschobene, diamantbeschichtete Schneidhülsen oder Schneidperlen erhalten wird. Diese Schneidhülsen können durch Aufquetschen, d. h. durch mechanische Verformung auf das Drahtseil aufgeklemmt werden. Sie können auch lose auf das Seil aufgeschoben werden, wobei der Zwischenraum zwischen den Schneidperlen durch Abstandshülsen, durch einzelne Abstützfedern oder durch eine Kunststoffumhüllung des Drahtseils erfolgt.

Die Verwendung eines Sägeseils hat neben den angesprochenen Vorteilen jedoch den Nachteil, daß die Führungseigenschaften beispielsweise in einer Bandsägemaschine gegenüber einem Sägeblatt schlechter sind, da ein Seil bei Belastung nach allen Richtungen ausweichen kann.

Der Erfindung liegt die Aufgabe zugrunde, ein Sägewerkzeug insbesondere für Bandsägen, Baum- bzw. Kettensägen oder auch Gattersägen zu schaffen, bei welchem das seilförmige oder kettenförmige Werkzeug in der Sägemaschine optimal geführt ist. Aufgabe der Erfindung ist es auch, eine hierfür angepaßte Sägemaschine vorzuschlagen.

Diese Aufgabe wird ausgehend von einem Sägewerkzeug nach Anspruch 1 oder eine Sägemaschine nach Anspruch 14 erfindungsgemäß durch die kennzeichnenden Teile dieser Ansprüche gelöst.

In den weiteren Unteransprüchen sind vorteilhafte Weiterbildungen und Verbesserungen des erfindungsgemäßen Gedankens wiedergegeben.

Der Erfindung liegt demnach der Kerngedanke zugrunde, die Vorteile eines Sägeseils mit den Vorteilen eines in einer Sägemaschine geführten Bandsägeblatts zu verbinden. Erfindungsgemäß sind hierfür Führungselemente oder Führungsflächen am Sägewerkzeug vorgesehen, die in entsprechend angepaßte Nuten oder Ausnehmungen an der Sägemaschine verlaufen. Hierdurch werden die optimalen Eigenschaften des Sägeseils kombiniert mit den guten Eigenschaften eines geführten Sägewerkzeugs. Dabei können die Führungselemente oder Führungsflächen an den auf dem Seil angeordneten Schneidhülsen selbst oder an separaten Halterungen für die Schneidhülsen oder Halterungen nur für diese Führungselemente angeordnet sein. Die Führungselemente können laschenartig oder stiftartig oder als seitliche Führungsflächen am Schneidelement selbst angebracht sein. Darüber hinaus können die Führungselemente beispielsweise an einer Kettensäge oder an einer Bandsäge in entsprechend ausgebildete verzahnte Antriebsräder als Antriebsmittel eingreifen.

Weitere Vorteile der Erfindung sind in der nachfolgenden Beschreibung anhand von vorteilhaften und zweckmäßigen Ausführungsbeispielen beschrieben. Es zeigen

Fig. 1 ein Sägeseil mit kombinierten Schneid- bzw. Schleifelementen und daran angeordneten Führungselementen,

Fig. 2 ein Sägeseil mit Schneid- bzw. Schleifelementen mit integrierten Führungsflächen,

Fig. 3 ein Sägeseil mit separater Halterung für Führungselemente zwischen den Schneid- bzw. Schleifelementen,

Fig. 4 ein Sägeseil mit einer separaten Halterung für Führungselemente mit fester oder loser Verbindung zu den Schneid- bzw. Schleifelementen,

Fig. 5 ein Sägeseil mit separater kombinierter Halterung für Schneidelemente und Führungselemente,

Fig. 6 eine Kettensäge aus Einzelglieder mit angesetzten Führungselementen und

Fig. 7 eine schematische Darstellung eines umlaufenden Sägewerkzeugs, wobei

Fig. 7a ein verzahntes Antriebsrad und

Fig. 7b ein glattes Antriebsrad darstellen.

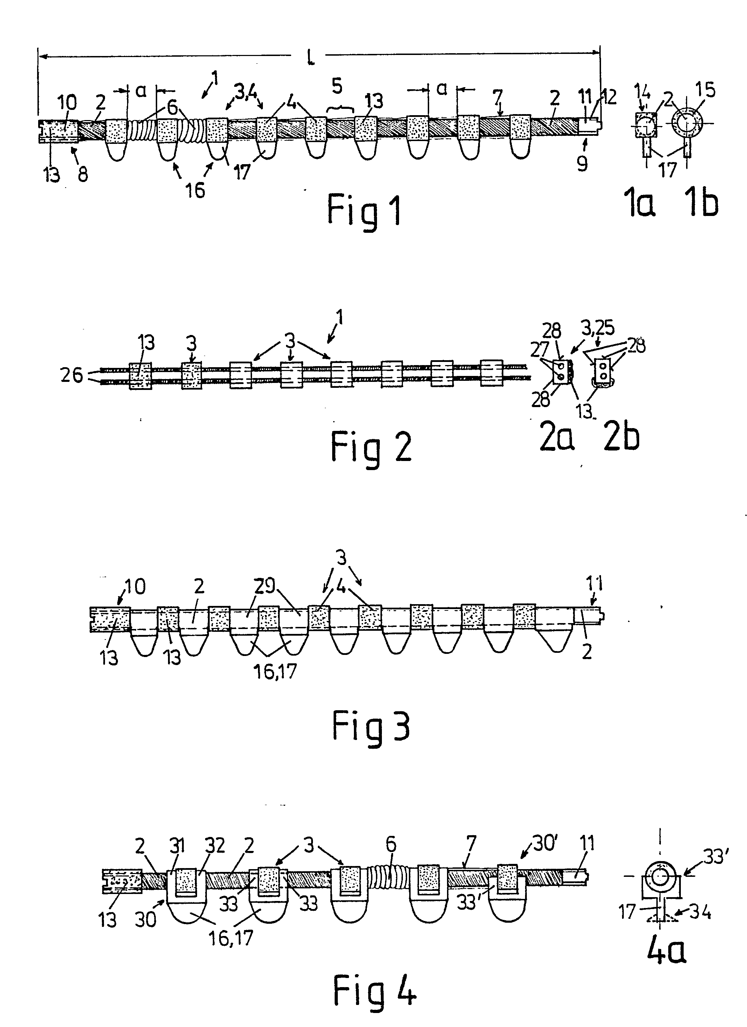

Das in der Fig. 1 in Seitenansicht dargestellte Sägewerkzeug 1 besteht aus einem verdrillten Sägeseil 2 mit im Abstand "a" voneinander angeordneten Schneid- bzw. Schleifelementen 3, die im allgemeinen als Hülsen 4 ausgebildet sind. Der Zwischenraum 5 mit der Länge "a" zwischen den Hülsen 4 wird wahlweise durch auf das Sägeseil 2 aufgebrachte Federn 6 oder durch einen Kunststoffüberzug 7 ausgefüllt, so daß die Hülsen 4 in ihrer Lage gegenüber dem Sägeseil 2 fixiert jedoch auswechselbar sind. Die Hülsen 4 sind feststehend, d. h. nicht drehend auf dem Sägeseil 2 aufgebracht. Dies kann durch Aufquetschen auf das Seil oder durch eine nicht näher dargestellte formschlüssige Verbindung im Zusammenhang mit dem Kunststoffüberzug 7 erfolgen.

An den Enden 8, 9 des Sägeseils 2 sind Verschlußteile 10, 11 vorgesehen, die es erlauben, daß das Sägeseil zu einem endlosen Seil verbunden wird. Hierfür ist das Verschlußteil 10 als Überwurfhülse ausgebildet, welche auf das Gewinde 12 des Verschlußteils 11 ohne Verdrillung des Sägewerkzeugs aufschraubbar ist.

Die Schneid- bzw. Schleifelemente 3, 4 sind an ihrer äußeren Umfangsfläche mit einer galvanisch aufgebrachten Diamantschicht als Schneidschicht bzw. Schleifschicht 13 versehen. Diese Diamantschicht ist in der Figur durch Punkte 13 angedeutet. Gleiches gilt für das als Hülse ausgebildete Verschlußteil 10 mit aufgebrachter Diamantbeschichtung 13. Der Querschnitt der Schneid- bzw. Schleifelemente ist in der Fig. 1a bzw. 1b in Stirnansicht dargestellt. Hierbei zeigt Fig. 1a einen quadratischen oder rechteckförmigen Querschnitt 14, während Fig. 1b einen kreisförmigen oder hülsenförmigen Querschnitt 15 zeigt.

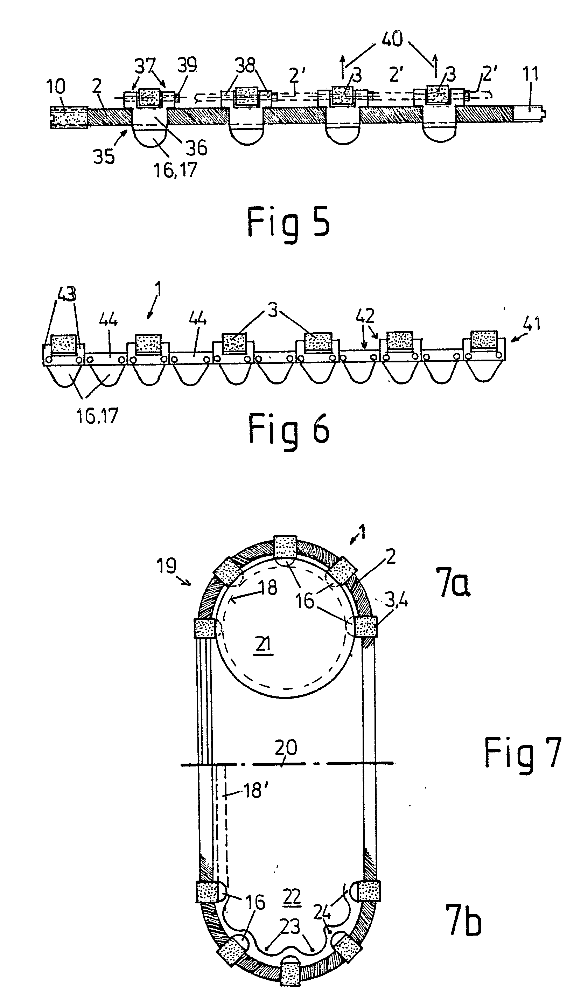

Zur Führung des Sägewerkzeugs 1 in einer, in Fig. 7 näher dargestellten Sägemaschine 19, weist das Sägewerkzeug 1 nach einer Seite ausgerichtete, radial ausladende Führungselemente 16 auf, die beim Ausführungsbeispiel nach Fig. 1 als Laschen 17 ausgebildet sind. Beim Ausführungsbeispiel nach Fig. 1 sind diese Laschen 17 direkt mit den Schneid- bzw. Schleifelementen 3, 4 verbunden, d. h. die Laschen 17 werden beim Herstellungsprozeß der Schneidelemente mit angeformt. In Fig. 1a, 1b sind die laschenförmigen Führungselemente 16, 17 in Stirnansicht dargestellt.

Die Führungselemente 16, 17 greifen in die entsprechend angepaßten Führungsnuten 18 (siehe Fig. 7) der Sägemaschine 19 ein, d. h. die Sägemaschine 19 weist Führungsbahnen oder Führungsnuten 18 auf, die das geschlossene Sägewerkzeug 1 oder Sägeseil 2 über die ganze Länge "l" führen.

Das in Fig. 1 dargestellte, geöffnete Sägewerkzeug 1 ist in Fig. 7 an der schematisch dargestellten Bandsägemaschine 19 wiedergegeben. Dabei zeigt die rechte Figurenhälfte gemäß Fig. 7a (siehe Trennstrich 20) ein glattes Antriebsrad 21 bzw. Umlenkrolle 21 mit der Führungsnut bzw. Führungsbahn 18 für die Führungselemente 16, 17. Die linke Figurenhälfte gemäß Fig. 7b zeigt ein verzahntes Antriebsrad oder Umlenkrolle 22 mit Zähne 23 in deren Zwischenraum 24 die Führungselemente 16 eingreifen.

Die Führungsnut bzw. Führungsbahn 18 erstreckt sich auch außerhalb des Bereichs der Antriebs- bzw. Umlenkrollen 21, 22, d. h. das Sägewerkzeug ist über möglichst die ganze Länge "l" und insbesondere in Bereichen kritischer Schwingungen geführt. Dieser sonstige Führungsbereich ist in Fig. 7 mit 18' angedeutet.

In den Figuren 2 bis 6 sind alternative Ausführungsformen eines Sägewerkzeugs 1 gezeigt.

Fig. 2 zeigt eine Spezialausführung eines Sägewerkzeugs 1 mit im Querschnitt rechteckförmigen Schneid- bzw. Schleifelementen 3 (siehe Fig. 2a, 2b). Durch diese speziellen Schneidkörper 25 sind zwei Seile 26 durch Bohrungen 27 hindurchgeführt, um dem Sägewerkzeug eine gewisse Steifigkeit und eine konstante Ausrichtung zu verleihen. Die Führung des Sägewerkzeugs nach Fig. 2 geschieht an, in Bezug auf die Schneidfläche 13, seitlichen Führungsflächen 28, die durch den Schneidkörper 25 selbst gebildet werden. Hierfür ist der Schneidkörper 25 lediglich an einer Stirnseite mit einer Diamantbeschichtung 13 versehen, während die hierzu seitlichen Außenflächen als Führungsflächen 28 zur Verfügung stehen. Beispielsweise zeigt Fig. 2a einen Schneidkörper 25 mit einer an einer Stirnfläche angeordneten Diamantschicht 13. Die übrigen zwei oder drei Seiten können als Führungflächen 28 in Führungsnuten 18, 18' der Sägemaschine 19 verwendet werden. In Fig. 2b ist eine andere Stirnfläche des Schneidkörpers 25 mit einer Diamantschicht 13 versehen, während die übrigen Seitenflächen als Führungsflächen 28 dienen.

Beim Ausführungsbeispiel nach Fig. 3 sind die Schneid-bzw. Schleifelemente 3 als feststehende oder lose drehende Hülsen oder Walzen ausgebildet. Bei einem auf dem Seil feststehenden Schneid- bzw. Schleifelement 3 kann auch ein rechteckförmiger Querschnitt verwendet werden.

In Fig. 3 sind die Führungselemente 16 an separaten Halterungen 29 angebracht, die als Hülsen 29 auf das Seil 2 aufgeschoben sind. Diese Anordnung ermöglicht es, daß sich die Schneidelemente 3, 4 frei auf dem Seil 2 drehend bewegen können, so daß ein gleichmäßiger Abrieb am Umfang der Schneidelemente erfolgen kann.

Selbstverständlich können auch mehrere Halterungen 29 oder sonstige Abstandshalter 6 (siehe Fig. 1) auf dem Seil nach Fig. 3 angeordnet sein. Sofern die Halterungen 29 lose auf dem Seil angeordnet sind, können diese und die Schneidelemente bei Bedarf erneuert bzw. ausgewechselt werden. Dies gilt insbesondere bei einem Verschleiß der Schneid- bzw. Schleifelemente 3, 4.

Im übrigen sind in allen zu beschreibenden Figuren gleiche Teile mit gleichem Bezugszeichen versehen. Dies gilt insbesondere für das Verschlußteil 10, 11 sowie die Diamantbeschichtung 13.

Beim Ausführungsbeispiel der Erfindung nach Fig. 4 sind die Schneid- bzw. Schleifelemente 3 fest oder lose drehend auf dem Seil angeordnet. Als Abstandshalter dienen die Feder 6 oder der Kunststoffüberzug 7. Die spezielle Halterung 30 ist als in Seitenansicht U-förmige Halterung mit Schenkel 31, 32 ausgebildet, wobei diese Schenkel 31, 32 das Schneid- bzw. Schleifelement 3 jeweils zwischen sich einschließen. An der Basisseite der U-förmigen Halterung 30 ist das laschenförmige Führungselement 16 angeformt.                 .

Die Schenkel 31, 32 umschließen das Seil 2 mittels einer Bohrung 33 vollständig. Die Bohrung 33 kann jedoch auch nur als halbkreisförmige Ausnehmung 33' in der Halterung 30 ausgebildet sein (siehe Fig. 4a), so daß das Seil 2 einschließlich den Schneid- bzw. Schleifelementen 3 von der Halterung 30 in Fig. 4 nach oben hin abgenommen werden kann. Dies ist insbesondere dann zweckmäßig, wenn die Führungselemente 16 schwalbenschwanzartige Vorsprünge 34 aufweisen, die in entsprechenden Hinterschneidungen der Führungsnuten bzw. Führungsbahnen 18, 18' der Sägemaschine 19 eingreifen, so daß die Halterungen 30 insgesamt in der Sägemaschine gehalten sind. Das Sägeseil 2 ist dann einfach von den Halterungen 30 abnehmbar und auswechselbar ausgebildet.

Das Ausführungsbeispiel der Erfindung nach Fig. 5 zeigt eine weitere Halterung 35, die eine Kombination bzw. Abwandlung aus Fig. 3 und 4 darstellt. Die Halterung 35 ist eine auf das Seil 2 aufgesetzte Hülse 36 mit angesetzten Führungselementen 16 wie in Fig. 3 mit Bezugszeichen 29 beschrieben. Zusätzlich ist die Hülse 36 mit einer U-förmigen Halterung 37 versehen, deren Schenkel 38 das Schneid- und Schleifelement 3 einschließen. Das Schneid- und Schleifelement kann als sich drehende, zylindrische Hülse oder Walze 3 oder auch als im Querschnitt rechteckförmiges oder quadratisches Schneidteil 3 ausgebildet sein. Die Befestigung des Schneid- und Schleifelements 3 geschieht mittels eines Durchsteckbolzens 39 und hat den Vorteil, daß nach Entfernung des Durchsteckbolzens 39 jedes Schneidelement 3 leicht aus der U-förmigen Halterung 37 entnommen werden kann. Die U-förmige Halterung 37 kann selbst wiederum so ausgebildet sein, wie es in Fig. 4 beschrieben ist, d. h. anstelle eines Bolzens 39 kann ein durchgehendes weiteres Seil 2' die Verbindung der einzelnen Schneidelemente 3 übernehmen. Gleichermaßen kann ein so eingesetztes Seil 2' mit Schneidelementen insgesamt nach oben (Pfeil 40) herausgenommen werden, wenn die U-förmige Halterung 37 nach oben hin offen ausgebildet ist. Im Normalfall sind jedoch die auswechselbaren Schneid- und Schleifelemente 3 mittels Durchsteckbolzen auswechselbar und feststehend oder drehbar in der U-förmigen Halterung 37 gelagert.

Ein weiteres Ausführungsbeispiel ist in Fig. 6 dargestellt. Hier wird das Sägewerkzeug 1 durch eine Kette 41 mit einzelnen Kettengliedern 42 gebildet. Jedes Kettenglied weist ein laschenförmiges Führungselement 16 wie zuvor beschrieben auf. Jedes zweite Kettenglied hat eine U-förmige Halterung 43, die die Schneid- bzw. Schleifelemente 3 aufnimmt. Dabei können die Schneid- bzw. Schleifelemente 3 lose oder festsitzend in der U-förmigen Halterung 43 befestigt sein. Das Zwischenglied 44 weist nur ein Führungselement 16 auf. Das Ausführungsbeispiel nach Fig. 6 eignet sich insbesondere für Baum- oder Kettensägen als umlaufende bzw. endlose Kette 41, wobei die Kette wie bei herkömmlichen Kettensägen ausgebildet sein kann. Auf diesen Stand der Technik wird verwiesen. Die U-förmige Halterung 43 kann ähnlich ausgebildet sein, wie die in Fig. 5 beschriebene Halterung 37.

Das erfindungsgemäße Sägewerkzeug läßt sich als endlos umlaufendes Sägewerkzeug in Bandsägen oder Kettensägen oder auch als linear laufendes Sägeseil in Gattersägen o. dgl. einsetzen. Die Erfindung ist nicht auf das dargestellte und beschriebene Ausführungsbeispiel beschränkt. Sie umfaßt auch vielmehr alle fachmännischen Abwandlungen und Weiterbildungen ohne eigenen erfinderischen Gehalt.

## Ansprüche

1. Sägewerkzeug, bestehend aus einem um- oder linear laufenden Seil oder einer Kette als Träger für darauf in Abständen zueinander angeordneten Schneid-bzw. Schleifelementen mit einem Diamant-, Hartmetall- oder Keramikbelag o. dgl., dadurch gekennzeichnet, daß zur Führung des Seiles (2, 26) bzw. der Kette (41) in der Sägemaschine (19) nach einer Seite hin ausgerichtete, radial ausladende Führungselemente (16) oder Führungsflächen (28) vorgesehen sind, die in entsprechende Führungsnuten oder Führungsbahnen (18, 18') an der Sägemaschine (19) formschlüssig eingreifen.

2. Sägewerkzeug nach Anspruch 1, dadurch gekennzeichnet, daß das Führungselement (16) als radial ausladende Führungslasche (17) oder als Führungsstift ausgebildet ist.

3. Sägewerkzeug nach Anspruch 1, dadurch gekennzeichnet, daß das Führungselement (16, 17) oder die Führungsfläche (28) an den Schneid- bzw. Schleifelementen (3) selbst oder an einer, auf dem Seil (2) oder der Kette (41) angeordneten Halterung (29, 30, 35) oder einem Kettenglied (42) angebracht ist.

4. Sägewerkzeug nach einem oder mehreren der Ansprüche 1 bis 3, dadurch gekennzeichnet, daß zwischen zwei auf dem Seil (2) angeordneten Schneid- bzw. Schleifelementen (3) wenigstens eine als Hülse ausgebildete Halterung (29) für das Führungselement (16) vorgesehen ist, die seitlich das in die Sägemaschine (19) eingreifende, laschenförmige Führungselement (16, 17) aufweist.

5. Sägewerkzeug nach einem oder mehreren der Ansprüche 1 bis 3, dadurch gekennzeichnet, daß das auf dem Seil (2) angeordnete Schneid- bzw. Schleifelement (3) von einer in Seitenansicht U-förmigen Halterung (30) umgeben ist, wobei die Halterung (30) an den Stirnseiten der U-förmigen Schenkel (31, 32) geschlossen (30) oder offen (30′) ausgebildet ist, derart, daß eine geschlossene Bohrung (33) oder halbkreisförmige Bohrung (33′) vorgesehen ist, und daß das Führungselement (16, 17) dem U-förmigen Schenkel (31, 32) gegenüberliegend an der Halterung (30, 30′) angeordnet ist.

6. Sägewerkzeug nach einem oder mehreren der Ansprüche 1 bis 3, dadurch gekennzeichnet, daß die Halterung (35) für das Schneid- bzw. Schleifelement (3) aus einer auf dem Seil aufgebrachten Hülse (36) besteht, die eine in Seitenansicht U-förmige zusätzliche Halterung (37) zur Aufnahme eines feststehenden oder drehbaren Schneid- bzw. Schleifelements (3) und ein der Halterung (37) gegenüberliegendes Führungselement (16) zur Seilführung aufweist.

7. Sägewerkzeug nach einem oder mehreren der vorhergehenden Ansprüche 1 bis 6, dadurch gekennzeichnet, daß das Seil (2) zur Aufnahme der Schneid- bzw. Schleifelemente (3) bzw. den Halterungen für die Schneidelemente (3) und/oder den Führungselementen (16) aus einem verdrillten Kernseil (2) besteht, wobei die auf dem Seil gebildeten Zwischenräume (5) mittels einer Kunststoffummantelung (7) oder mittels Zwischenfedern (6) ausgefüllt sind.

8. Sägewerkzeug nach einem oder mehreren der Ansprüche 1 bis 3, dadurch gekennzeichnet, daß die Kette (41) aus nebeneinanderliegenden Kettengliedern (42) besteht, wobei die Kettenglieder (42, 43) als Halterungen für das Schneid- oder Schleifelement (3) und/oder für das Führungselement (16, 17) ausgebildet sind.

9. Sägewerkzeug nach Anspruch 8, dadurch gekennzeichnet, daß die Kettenglieder (42) abwechselnd aus einer ersten, U-förmigen Halterung (43) für das darin feststehend oder drehbar angeordnete Schneid- oder Schleifelement (3) und einem dieser Halterung (43) gegenüberliegenden Führungselement (16) und wenigstens einer zwischen zwei Schneid- oder Schleifelementen (3) liegenden zweiten Halterung (44) für das daran angeordnete Führungselement (16, 17) gebildet sind.

10. Vorrichtung nach einem oder mehreren der vorhergehenden Ansprüche, dadurch gekennzeichnet, daß bei einem umlaufenden Sägeseil (2) oder einer Kette (41) die Führungselemente (16, 17) in ein glattes Antriebsrad (21) oder in ein verzahntes Antriebsrad (22) eingreifen, wobei der Transport kraftschlüssig und/oder formschlüssig erfolgt.

11. Sägewerkzeug nach einem oder mehreren der Ansprüche 1 bis 10, dadurch gekennzeichnet, daß das Sägeseil (2) oder die Kette (41) einen auftrennbaren Verschluß (10, 11) an den Seilenden (8, 9) aufweist.

12. Sägewerkzeug nach Anspruch 1, dadurch gekennzeichnet, daß die Führungsflächen (28) für die Führungsnuten (18, 18′) an einem, im Querschnitt rechteckförmigen oder quadratischen Schneidelement (3, 25) angeordnet sind, wobei nur an einer Stirnfläche eine Schneidschicht (13) vorgesehen ist.

13. Bandsägemaschine oder Kettensäge zur Verwendung eines Sägewerkzeugs nach einem oder mehreren der vorhergehenden Ansprüche 1 bis 12, dadurch gekennzeichnet, daß das umlaufende Sägewerkzeug (1) weitgehend über seine gesamte umlaufende Länge mittels Führungsnuten (18, 18′) für die Führungselemente (16, 17) an dem Sägewerkzeug (1) geführt ist.

14. Bandsägemaschine oder Kettensäge nach Anspruch 13, dadurch gekennzeichnet, daß die Führungselemente (16, 17) des Sägewerkzeugs (1) formschlüssig in einer hinterschnittenen, schwalbenschwanzartigen Führungsnut (18, 18′) in der Sägemaschine (19) mittels einer Schwalbenschwanzführung (34) o. dgl. geführt sind.

Fig 1

1a 1b

Fig 2

2a 2b

Fig 3

Fig 4

4a

Fig 5

Fig 6

7a

Fig 7

7b

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| | **EINSCHLÄGIGE DOKUMENTE** | | EP 89105384.5 |
| X | AT - B - 206 343 (STIHL) <br> * Gesamt * <br><br> -- | 1,2,3, 6,8, 10,13 | B 28 D 1/08 <br> B 27 B 33/14 |
| X | GB - A - 725 721 (SONAPAR) <br> * Fig. 10 * <br><br> -- | 1,2,3, 4,10, 12,13 | |
| X | FR - A - 969 357 (KER SUZAN) <br> * Fig. 1 * <br><br> -- | 1,2,3, 4,7,12 | |
| X | DE - B - 2 245 730 (MASCHINENFABRIK KORPMANN) <br> * Fig. 1,6 * <br><br> -- | 1,2,3, 8,9 | |
| X | FR - A - 1 102 721 (STONE) <br> * Fig. 1,4,5 * <br><br> -- | 1,2,3, 10 | RECHERCHIERTE SACHGEBIETE (Int. Cl.4) |
| A | EP - A2/A3 - 0 160 625 (BROCCO) <br> * Fig. * <br><br> ---- | 7 | B 21 D <br> B 23 D <br> B 27 B <br> B 28 D <br> E 21 C |

Der vorliegende Recherchenbericht wurde für alle Patentansprüche erstellt.

| Recherchenort | Abschlußdatum der Recherche | Prüfer |
|---|---|---|
| WIEN | 09-06-1989 | GLAUNACH |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82